# EUROPEAN PATENT APPLICATION

(11) **EP 4 300 917 A1**
(43) Date of publication of application: **03.01.2024**
(21) Application number: 21966496.8
(22) Date of filing: 03.12.2021
(51) Int. Cl.: H04L 65/40, H04L 12/40, H04L 49/00, G06F 3/14, G06F 9/455

(54) **COMMUNICATION DEVICE FOR VEHICLE AND DISPLAY DEVICE FOR VEHICLE, HAVING SAME**

(71) Applicant: LG Electronics Inc., Yeongdeungpo-gu Seoul 07336 (KR)
(72) Inventor: PARK, Sehwan, Seoul 08592 (KR); PARK, Namyong, Seoul 08592 (KR); KIM, Jungbae, Seoul 08592 (KR); KIM, Gyujin, Seoul 08592 (KR); PARK, Jingu, Seoul 08592 (KR)
(74) Representative: Vossius & Partner Patentanwälte Rechtsanwälte mbB
(86) International application number: PCT/KR2021/018251
(87) International publication number: WO 2023/101070

(57) **Abstract**

Disclosed is a vehicle communication device including a plurality of communication modules disposed at a plurality of areas of a vehicle, the plurality of communication modules being configured to receive signals from a plurality of sensor devices mounted to the vehicle, and a signal processing device disposed between the areas of the vehicle, wherein each communication module includes a first connector configured to receive signals from some of the plurality of sensor devices at a first communication speed, a second connector configured to communicate with the signal processing device at a second communication speed, and an Ethernet switch configured to perform switching. Accordingly, wiring harnesses between the plurality of sensor devices and the signal processing device may be simply implemented.

## Description

### Technical field of the invention

The present disclosure relates to a vehicle communication device and a display apparatus for vehicle including the same, and more particularly to a display apparatus for vehicle capable of simply implementing wiring harnesses between a plurality of sensor devices and a signal processing device.

### Background technology

A vehicle is an apparatus that a driver moves in a desired direction. A representative example of the vehicle is a car.

Meanwhile, a plurality of sensor devices and a display apparatus for vehicle is mounted at various positions in the vehicle for convenience of users who use the vehicle.

Meanwhile, wiring harnesses are used to transmit signals sensed by the plurality of sensor devices in the vehicle to a signal processing device.

When the number of sensor devices is increased, however, the length of the wiring harnesses is also increased, whereby wiring is complicated.

### Detailed description of the invention

### Technical objectives

An object of the present disclosure is to provide a display apparatus for vehicle capable of simply implementing wiring harnesses between a plurality of sensor devices and a signal processing device.

Another object of the present disclosure is to provide a display apparatus for vehicle capable of performing high-speed data communication between a plurality of virtual machines.

A further object of the present disclosure is to provide a display apparatus for vehicle capable of performing high-speed data communication even though a plurality of virtual machines is driven by different operating systems.

### Technical solutions

In accordance with an aspect of the present disclosure, the above and other objects can be accomplished by the provision of a vehicle communication device including a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to the outside, and a signal processing device disposed between the plurality of areas of the vehicle, the signal processing device being configured to receive signals from the plurality of communication modules and to perform signal processing, wherein each communication module includes a first connector configured to receive signals from some of the plurality of sensor devices at a first communication speed, a second connector configured to communicate with the signal processing device at a second communication speed higher than the first communication speed, and an Ethernet switch disposed between the first connector and the second connector, the Ethernet switch being configured to perform switching.

Meanwhile, each communication module may further include a processor electrically connected to the Ethernet switch, and the processor may process signals from the sensor devices disposed at the plurality of areas of the vehicle and may be configured to transmit the processed signals to the signal processing device via the second connector.

Meanwhile, each communication module may transmit signals from the sensor devices disposed at a corresponding one of the plurality of areas of the vehicle to the signal processing device.

Meanwhile, the signal processing device may include an Ethernet switch operated based on the second communication speed, the Ethernet switch in the signal processing device may be operated as a master Ethernet device, and the Ethernet switch in each communication module may be operated as a slave Ethernet device based on the first communication speed or the second communication speed.

Meanwhile, the first connector may perform serial communication, and the second connector may perform parallel communication.

Meanwhile, the plurality of communication modules may include a first communication module configured to receive signals from the sensor devices disposed in a first area of the vehicle, among the plurality of sensor devices, and to transmit the signals to the signal processing device and a second communication module configured to receive signals from the sensor devices disposed in a second area of the vehicle, among the plurality of sensor devices, and to transmit the signals to the signal processing device.

Meanwhile, the plurality of communication modules may include a first communication module configured to receive signals from the sensor devices disposed in a first area of the vehicle, among the plurality of sensor devices, and to transmit the signals to the signal processing device, a second communication module configured to receive signals from the sensor devices disposed in a second area of the vehicle, among the plurality of sensor devices, and to transmit the signals to the signal processing device, a third communication module configured to receive signals from the sensor devices disposed in a third area of the vehicle, among the plurality of sensor devices, and to transmit the signals to the signal processing device, and a fourth communication module configured to receive signals from the sensor devices disposed in a fourth area of the vehicle, among the plurality of sensor devices, and to transmit the signals to the signal processing device.

Meanwhile, each communication module may output a vehicle control signal for door control and seat control during driving of the vehicle.

Meanwhile, each of the plurality of sensor devices may include a camera, a lidar, a radar, or a position sensor.

Meanwhile, the signal processing device may include a processor configured to perform signal processing for a display mounted in the vehicle, the processor may execute first to third virtual machines on a hypervisor in the processor, the second virtual machine may be operated for a first display, the third virtual machine may be operated for a second display, and the first virtual machine in the processor may be configured to set a shared memory based on the hypervisor for transmission of data to the second virtual machine and the third virtual machine.

Meanwhile, the first virtual machine in the processor may be configured to set the shared memory based on the hypervisor for transmission of the same data to the second virtual machine and the third virtual machine.

Meanwhile, the first virtual machine in the processor may receive position information data variable due to movement from any one of the plurality of communication modules, may process the position information data, and may provide the processed position information data to the second virtual machine or the third virtual machine.

Meanwhile, the second virtual machine and the third virtual machine may be driven by different operating systems.

Meanwhile, the first virtual machine in the processor may transmit information regarding the shared memory including key data for data access to the second virtual machine and the third virtual machine after setting of the shared memory.

Meanwhile, the first virtual machine in the processor may include an input and output server interface and a security manager, and each of the second virtual machine and the third virtual machine may include an input and output client interface.

Meanwhile, in order to transmit data from the input and output server interface in the first virtual machine to the input and output client interface, the security manager may allocate the shared memory, and the input and output client interface may transmit a request for connection to the input and output server interface after allocation of the shared memory.

Meanwhile, the input and output server interface may transmit information regarding the shared memory including key data for data access to the input and output client interface after allocation of the shared memory, and the input and output client interface may access the shared memory based on the key data.

Meanwhile, the input and output server interface may receive information regarding a first buffer in the shared memory, the first buffer being empty, may write first data in the first buffer in the shared memory, and may transmit buffer information of the first buffer to the input and output client interfaces in the second virtual machine and the third virtual machine.

Meanwhile, the reference count of the first buffer may be changed in a first direction based on writing of the first data in the first buffer, and in the case in which copying of the first data to the first buffer is completed, the reference count of the first buffer may be changed in a second direction, the second direction being opposite the first direction.

Meanwhile, the shared memory may include a plurality of buffers, the first virtual machine may write first frame data to third frame data respectively in a first buffer to a third buffer, among the plurality of buffers, and the input and output client interfaces in the second virtual machine and the third virtual machine may sequentially copy the first frame data to the third frame data from the first buffer to the third buffer.

Meanwhile, after copying of the first frame data from the first buffer by the input and output client interface in the third virtual machine is completed, the second virtual machine may copy the second frame data from the second buffer.

Meanwhile, the signal processing device may further include a legacy virtual machine configured to receive and process Ethernet data, wherein the first virtual machine may receive, process, and output vehicle sensor data, position information data, camera image data, audio data, or touch input data.

Meanwhile, the first virtual machine in the processor may receive vehicle sensor data, position information data, or camera image data from at least one of the plurality of communication modules, may process the received data, and may provide the processed data to the second virtual machine or the third virtual machine.

Meanwhile, the first virtual machine may receive wheel speed sensor data of the vehicle from at least one of the plurality of communication modules, may process the received wheel speed sensor data, and may transmit the processed wheel speed sensor data to at least one of the second virtual machine or the third virtual machine.

In accordance with another aspect of the present disclosure, there is provided a vehicle communication device including a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to the outside, wherein each communication module includes a first connector configured to receive signals from the plurality of sensor devices at a first communication speed, a second connector configured to communicate with one of the communication modules adjacent thereto at a second communication speed higher than the first communication speed, and an Ethernet switch disposed between the first connector and the second connector, the Ethernet switch being configured to perform switching.

In accordance with a further aspect of the present disclosure, there is provided a display apparatus for vehicle, the display apparatus including a first display, a second display, and a vehicle communication device, wherein a signal processing device in the vehicle communication device includes a processor configured to perform signal processing for the first display and the second display.

### Effects of the invention

A vehicle communication device according to an embodiment of the present disclosure includes a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to the outside, and a signal processing device disposed between the plurality of areas of the vehicle, the signal processing device being configured to receive signals from the plurality of communication modules and to perform signal processing, wherein each communication module includes a first connector configured to receive signals from some of the plurality of sensor devices at a first communication speed, a second connector configured to communicate with the signal processing device at a second communication speed higher than the first communication speed, and an Ethernet switch disposed between the first connector and the second connector, the Ethernet switch being configured to perform switching. Since the plurality of communication modules is disposed for respective areas, as described above, wiring harnesses between the plurality of sensor devices and the signal processing device may be simply implemented. In addition, Ethernet, which is a public communication protocol, is used, whereby efficient and stable data communication may be achieved.

Meanwhile, each communication module may transmit signals from the sensor devices disposed at a corresponding one of the plurality of areas of the vehicle to the signal processing device. Consequently, efficient and stable data communication may be achieved.

Meanwhile, the signal processing device may include an Ethernet switch operated based on the second communication speed, the Ethernet switch in the signal processing device may be operated as a master Ethernet device, and the Ethernet switch in each communication module may be operated as a slave Ethernet device based on the first communication speed or the second communication speed. Consequently, efficient and stable data communication may be achieved.

Meanwhile, the first connector may perform serial communication, and the second connector may perform parallel communication. Consequently, efficient and stable data communication may be achieved.

Meanwhile, the plurality of communication modules may include a first communication module configured to receive signals from the sensor devices disposed in a first area of the vehicle, among the plurality of sensor devices, and to transmit the signals to the signal processing device and a second communication module configured to receive signals from the sensor devices disposed in a second area of the vehicle, among the plurality of sensor devices, and to transmit the signals to the signal processing device. Since the plurality of communication modules is disposed for respective areas, as described above, the wiring harnesses between the plurality of sensor devices and the signal processing device may be simply implemented. In addition, efficient and stable data communication may be achieved.

Meanwhile, the plurality of communication modules may include a first communication module configured to receive signals from the sensor devices disposed in a first area of the vehicle, among the plurality of sensor devices, and to transmit the signals to the signal processing device, a second communication module configured to receive signals from the sensor devices disposed in a second area of the vehicle, among the plurality of sensor devices, and to transmit the signals to the signal processing device, a third communication module configured to receive signals from the sensor devices disposed in a third area of the vehicle, among the plurality of sensor devices, and to transmit the signals to the signal processing device, and a fourth communication module configured to receive signals from the sensor devices disposed in a fourth area of the vehicle, among the plurality of sensor devices, and to transmit the signals to the signal processing device. Since the plurality of communication modules is disposed for respective areas, as described above, the wiring harnesses between the plurality of sensor devices and the signal processing device may be simply implemented. In addition, efficient and stable data communication may be achieved.

Meanwhile, each communication module may output a vehicle control signal for door control and seat control during driving of the vehicle. Consequently, vehicle control through each communication module may be achieved.

Meanwhile, each of the plurality of sensor devices may include a camera, a lidar, a radar, or a position sensor. Consequently, signals from various kinds of sensor devices may be efficiently and stably transmitted to the signal processing device.

Meanwhile, the signal processing device may include a processor configured to perform signal processing for a display mounted in the vehicle, the processor may execute first to third virtual machines on a hypervisor in the processor, the second virtual machine may be operated for a first display, the third virtual machine may be operated for a second display, and the first virtual machine in the processor may be configured to set a shared memory based on the hypervisor for transmission of data to the second virtual machine and the third virtual machine. Consequently, high-speed data communication between the plurality of virtual machines may be performed.

Meanwhile, the first virtual machine in the processor may be configured to set the shared memory based on the hypervisor for transmission of the same data to the second virtual machine and the third virtual machine. Consequently, the plurality of displays in the vehicle may display the same images in a synchronized state.

Meanwhile, the first virtual machine in the processor may receive position information data variable due to movement from any one of the plurality of communication modules, may process the position information data, and may provide the processed position information data to the second virtual machine or the third virtual machine. Consequently, the virtual machines may share the position information data received from the sensor devices.

Meanwhile, the second virtual machine and the third virtual machine may be driven by different operating systems. Consequently, high-speed data communication may be performed even though the plurality of virtual machines is driven by different operating systems.

Meanwhile, the first virtual machine in the processor may transmit information regarding the shared memory including key data for data access to the second virtual machine and the third virtual machine after setting of the shared memory.

Meanwhile, the first virtual machine in the processor may include an input and output server interface and a security manager, and each of the second virtual machine and the third virtual machine may include an input and output client interface. Consequently, the second virtual machine and the third virtual machine may access the shared memory. In addition, the plurality of displays in the vehicle may display the same images in a synchronized state. In addition, 1:N data communication may be achieved.

Meanwhile, in order to transmit data from the input and output server interface in the first virtual machine to the input and output client interface, the security manager may allocate the shared memory, and the input and output client interface may transmit a request for connection to the input and output server interface after allocation of the shared memory. Consequently, the second virtual machine and the third virtual machine may access the shared memory.

Meanwhile, the input and output server interface may transmit information regarding the shared memory including key data for data access to the input and output client interface after allocation of the shared memory, and the input and output client interface may access the shared memory based on the key data. Consequently, the second virtual machine and the third virtual machine may access the shared memory.

Meanwhile, the input and output server interface may receive information regarding a first buffer in the shared memory, the first buffer being empty, may write first data in the first buffer in the shared memory, and may transmit buffer information of the first buffer to the input and output client interfaces in the second virtual machine and the third virtual machine. Consequently, the second virtual machine and the third virtual machine may access the shared memory.

Meanwhile, the reference count of the first buffer may be changed in a first direction based on writing of the first data in the first buffer, and in the case in which copying of the first data to the first buffer is completed, the reference count of the first buffer may be changed in a second direction, the second direction being opposite the first direction. After completion of copying, therefore, new data may be written in the first buffer.

Meanwhile, the shared memory may include a plurality of buffers, the first virtual machine may write first frame data to third frame data respectively in a first buffer to a third buffer, among the plurality of buffers, and the input and output client interfaces in the second virtual machine and the third virtual machine may sequentially copy the first frame data to the third frame data from the first buffer to the third buffer.

Meanwhile, after copying of the first frame data from the first buffer by the input and output client interface in the third virtual machine is completed, the second virtual machine may copy the second frame data from the second buffer. Consequently, the second virtual machine and the third virtual machine may access the shared memory.

Meanwhile, the signal processing device according to the embodiment of the present disclosure may further include a legacy virtual machine configured to receive and process Ethernet data, wherein the first virtual machine may receive, process, and output vehicle sensor data, position information data, camera image data, audio data, or touch input data. Consequently, data processing may be efficiently performed. In particular, the first virtual machine may process most of the data, whereby 1:N data sharing may be achieved.

Meanwhile, the first virtual machine in the processor may receive vehicle sensor data, position information data, or camera image data from at least one of the plurality of communication modules, may process the received data, and may provide the processed data to the second virtual machine or the third virtual machine.

Meanwhile, the first virtual machine may receive wheel speed sensor data of the vehicle from at least one of the plurality of communication modules, may process the received wheel speed sensor data, and may transmit the processed wheel speed sensor data to at least one of the second virtual machine or the third virtual machine. Consequently, at least one virtual machine may share the wheel speed sensor data of the vehicle.

A vehicle communication device according to another embodiment of the present disclosure includes a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to the outside, wherein each communication module includes a first connector configured to receive signals from the plurality of sensor devices at a first communication speed, a second connector configured to communicate with one of the communication modules adjacent thereto at a second communication speed higher than the first communication speed, and an Ethernet switch disposed between the first connector and the second connector, the Ethernet switch being configured to perform switching. Since the plurality of communication modules is disposed for respective areas, as described above, wiring harnesses between the plurality of sensor devices and the plurality of communication modules may be simply implemented. In addition, Ethernet, which is a public communication protocol, is used, whereby efficient and stable data communication may be achieved.

A display apparatus for vehicle according to an embodiment of the present disclosure includes a first display, a second display, and a vehicle communication device, wherein a signal processing device in the vehicle communication device includes a processor configured to perform signal processing for the first display and the second display. Since the plurality of communication modules is disposed for respective areas, as described above, wiring harnesses between the plurality of sensor devices and the signal processing device may be simply implemented. In addition, Ethernet, which is a public communication protocol, is used, whereby efficient and stable data communication may be achieved.

### BRIEF DESCRIPTION OF THE DRAWINGS

FIG. 1 is a view showing an example of the exterior and interior of a vehicle;
FIG. 2 is a view showing the disposition of a vehicle communication device in a vehicle related to the present disclosure;
FIG. 3 is a view showing the disposition of a vehicle communication device in a vehicle according to an embodiment of the present disclosure;
FIG. 4 is a view showing the disposition of a vehicle communication device in a vehicle according to another embodiment of the present disclosure;
FIGS. 5A and 5B are views referred to in the description of FIG. 4;
FIG. 6 is a view showing the disposition of a vehicle communication device in a vehicle according to a further embodiment of the present disclosure;
FIG. 7A is a view showing another example of the interior of the vehicle;
FIG. 7B is a view showing the external appearance of a display apparatus for vehicle according to an embodiment of the present disclosure;
FIG. 8 illustrates an example of an internal block diagram of the display apparatus for vehicle of FIG. 7B;
FIG. 9 is a view showing a system driven in a signal processing device related to the present disclosure;
FIG. 10 is a view showing an example of a system driven in a signal processing device according to an embodiment of the present disclosure;
FIG. 11 is a view referred to in the description of operation of the system driven in the signal processing device according to the embodiment of the present disclosure; and
FIGS. 12A to 20 are views referred to in the description of FIG. 10 or 11.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

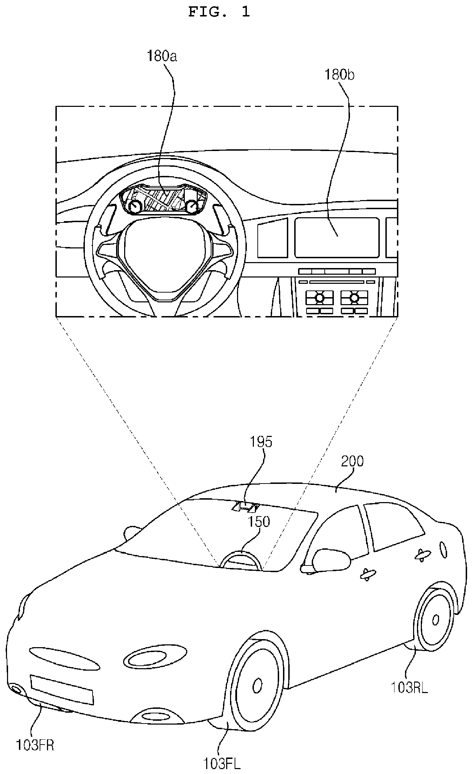

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, according to the embodiment of the present disclosure, in a display apparatus 100 for vehicle including a plurality of displays 180a and 180b, the plurality of displays 180a and 180b may display the same images in a synchronized state.

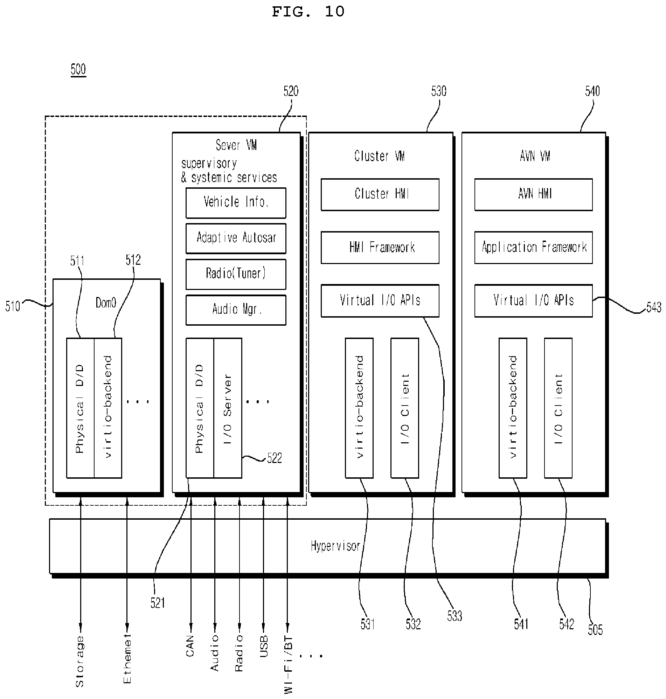

In particular, a signal processing device 170 in the display apparatus 100 for vehicle may transmit the same data to a plurality of virtual machines in a synchronized state, and may be configured to display the same inages on the displays. This will be described with reference to FIG. 10 and subsequent figures.

Meanwhile, the vehicle 200 described in this specification may be a concept including all of a vehicle having an engine as a power source, a hybrid vehicle having an engine and an electric motor as a power source, and an electric vehicle having an electric motor as a power source.

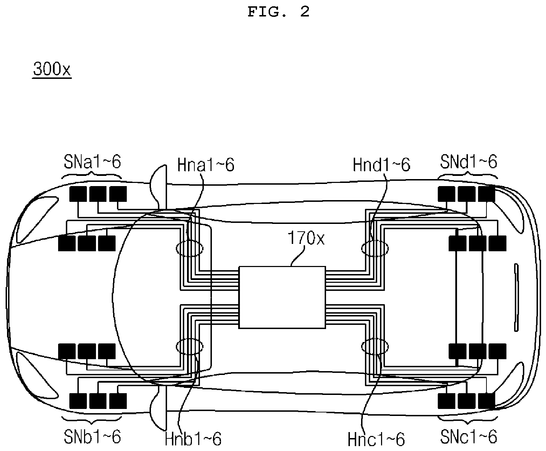

FIG. 2 is a view showing the disposition of a vehicle communication device in a vehicle related to the present disclosure.

Referring to the figure, the vehicle communication device 300x in the vehicle related to the present disclosure may include a plurality of sensor devices SNa1 to SNd6 mounted to the vehicle 200 and a signal processing device 170x configured to receive signals from the plurality of sensor devices SNa1 to SNd6.

The figure illustrates that, among the plurality of sensor devices SNa1 to SNd6, the sensor devices SNa1 to SNa6 are located in a first area at a right front of the vehicle in the vehicle, the sensor devices SNb1 to SNb6 are located in a second area at a left front of the vehicle in the vehicle, the sensor devices SNc1 to SNc6 are located in a third area at a left rear of the vehicle in the vehicle, and the sensor devices SNd1 to SNd6 are located in a fourth area at a right rear of the vehicle in the vehicle.

Meanwhile, in the vehicle communication device 300x in the vehicle of FIG. 2, wiring harnesses HNal to HNd6 are disposed between the plurality of sensor devices SNa1 to SNd6 and the signal processing device 170x in order to transmit signals from the plurality of sensor devices SNa1 to SNd6.

The figure illustrates that the wiring harnesses HNal to HNa6 are connected to the sensor devices SNa1 to SNa6 in the first area at the right front of the vehicle in the vehicle, the wiring harnesses HNb1 to HNb6 are connected to the sensor devices SNb1 to SNb6 in the second area at the left front of the vehicle in the vehicle, the wiring harnesses HNc1 to HNc6 are connected to the sensor devices SNc1 to SNc6 in the third area at the left rear of the vehicle in the vehicle, and the wiring harnesses HNd1 to HNd6 are connected to the sensor devices SNd1 to SNd6 in the fourth area at the right rear of the vehicle in the vehicle.

In response to the number of sensor devices being increased, however, the length of the wiring harnesses HNal to HNd6 is also increased, whereby wiring is complicated.

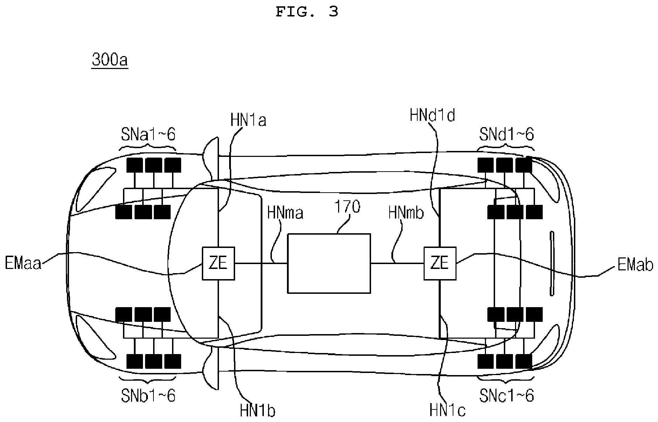

Consequently, an embodiment of the present disclosure proposes a scheme capable of simply implementing a wiring harness through reduction in length of the wiring harness. This will be described with reference to FIG. 3 and subsequent figures.

FIG. 3 is a view showing the disposition of a vehicle communication device in a vehicle according to an embodiment of the present disclosure.

Referring to the figure, the vehicle communication device 300a according to the embodiment of the present disclosure includes a plurality of communication modules EMaa and EMab disposed at a plurality of areas of the vehicle 200, the plurality of communication modules EMaa and EMab being configured to receive signals from a plurality of sensor devices SNa1 to SNd6 mounted to the vehicle 200 to be disposed at the plurality of areas of the vehicle 200 and to transmit at least some of the received signals to the outside, and a signal processing device 170 disposed between the plurality of areas of the vehicle 200, the signal processing device 170 being configured to receive signals from the plurality of communication modules EMaa and EMab and to perform signal processing.

Meanwhile, the plurality of communication modules EMaa and EMab may include a first communication module EMaa configured to receive signals from the sensor devices SNa1 to SNb6 disposed in a first area of the vehicle 200, among the plurality of sensor devices SNa1 to SNd6, and to transmit the signals to the signal processing device 170 and a second communication module EMab configured to receive signals from the sensor devices SNc1 to SNd6 disposed in a second area of the vehicle 200, among the plurality of sensor devices SNa1 to SNd6, and to transmit the signals to the signal processing device 170.

In particular, the vehicle communication device 300a of FIG. 3 may include a first communication module EMaa disposed at a front of the vehicle in the vehicle, a second communication module EMab disposed at a rear of the vehicle in the vehicle, and a signal processing device 170 configured to receive signals from the first communication module EMaa and the second communication module EMab.

Meanwhile, the first communication module EMaa of FIG. 3 is connected to the sensor devices SNa1 to SNa6 disposed in the first area at the right front of the vehicle in the vehicle, among the plurality of sensor devices SNa1 to SNd6, via a wiring harness HN1a, and is connected to the sensor devices SNb1 to SNb6 disposed in the second area at the left front of the vehicle in the vehicle, among the plurality of sensor devices SNa1 to SNd6, via a wiring harness HN1b.

Meanwhile, the second communication module EMab of FIG. 3 is connected to the sensor devices SNc1 to SNc6 disposed in the third area at the left rear of the vehicle in the vehicle, among the plurality of sensor devices SNa1 to SNd6, via a wiring harness HN1c, and is connected to the sensor devices SNd1 to SNd6 disposed in the fourth area at the right rear of the vehicle in the vehicle, among the plurality of sensor devices SNa1 to SNd6, via a wiring harness HN1d.

Meanwhile, the first communication module EMaa and the signal processing device 170 are connected to each other via a wiring harness HNma, and the second communication module EMab and the signal processing device 170 are connected to each other via a wiring harness HNmb.

In the vehicle communication device 300a of FIG. 3, the plurality of sensor devices SNa1 to SNd6 in the vehicle is divided to be disposed at a plurality of areas or zones, and each communication module is disposed to correspond to specific ones of the plurality of areas or zones, whereby the number and wiring length of wiring harnesses may be reduced, compared to FIG. 2. That is, the wiring harnesses between the plurality of sensor devices SNa1 to SNd6 and the signal processing device 170 may be simply implemented. In addition, efficient and stable data communication may be achieved.

Meanwhile, each of the communication modules EMaa and EMab may output a vehicle control signal for door control and seat control during driving of the vehicle 200. Consequently, vehicle control through each of the communication modules EMaa and EMab may be achieved.

Meanwhile, each of the plurality of sensor devices SNa1 to SNd6 may include a camera, a lidar, a radar, or a position sensor. Consequently, signals from various kinds of sensor devices may be efficiently and stably transmitted to the signal processing device 170.

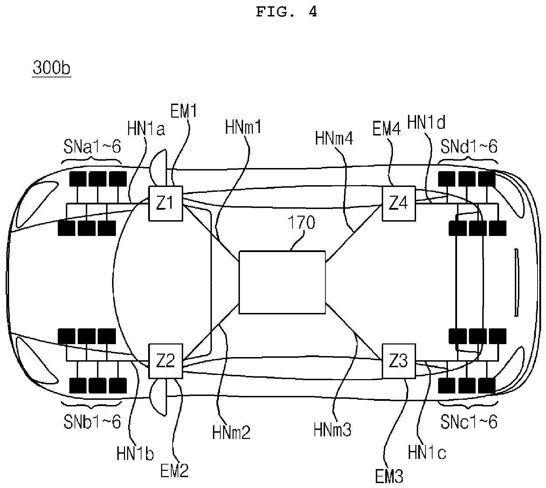

FIG. 4 is a view showing the disposition of a vehicle communication device in a vehicle according to another embodiment of the present disclosure.

Referring to the figure, the vehicle communication device 300b according to the other embodiment of the present disclosure includes a plurality of communication modules EM1 to EM4 disposed at a plurality of areas of the vehicle 200, the plurality of communication modules EM1 to EM4 being configured to receive signals from a plurality of sensor devices SNa1 to SNd6 mounted to the vehicle 200 to be disposed at the plurality of areas of the vehicle 200 and to transmit at least some of the received signals to the outside, and a signal processing device 170 disposed between the plurality of areas of the vehicle 200, the signal processing device 170 being configured to receive signals from the plurality of communication modules EM1 to EM4 and to perform signal processing.

Meanwhile, the plurality of communication modules EM1 to EM4 may include a first communication module EM1 configured to receive signals from the sensor devices SNa1 to SNa6 disposed in the first area of the vehicle 200, among the plurality of sensor devices SNa1 to SNd6, and to transmit the signals to the signal processing device 170, a second communication module EM2 configured to receive signals from the sensor devices SNb1 to SNb6 disposed in the second area of the vehicle 200, among the plurality of sensor devices SNa1 to SNd6, and to transmit the signals to the signal processing device 170, a third communication module EM3 configured to receive signals from the sensor devices SNc1 to SNc6 disposed in the third area of the vehicle 200, among the plurality of sensor devices SNa1 to SNd6, and to transmit the signals to the signal processing device 170, and a fourth communication module EM4 configured to receive signals from the sensor devices SNd1 to SNd6 disposed in the fourth area of the vehicle 200, among the plurality of sensor devices SNa1 to SNd6, and to transmit the signals to the signal processing device 170.

In particular, the vehicle communication device 300b of FIG. 4 may include a first communication module EM1 disposed at the right front of the vehicle in the vehicle, a second communication module EM2 disposed at the left front of the vehicle in the vehicle, a third communication module EM3 disposed at the left rear of the vehicle in the vehicle, a fourth communication module EM4 disposed at the right rear of the vehicle in the vehicle, and a signal processing device 170 configured to receive signals from the communication modules EM1 to EM4.

Meanwhile, the first communication module EM1 of FIG. 4 is connected to the sensor devices SNa1 to SNa6 disposed in the first area at the right front of the vehicle in the vehicle, among the plurality of sensor devices SNa1 to SNd6, via a wiring harness HN1a.

Meanwhile, the second communication module EM2 is connected to the sensor devices SNb1 to SNb6 disposed in the second area at the left front of the vehicle in the vehicle via a wiring harness HN1b.

Meanwhile, the third communication module EM3 is connected to the sensor devices SNc1 to SNc6 disposed in the third area at the left rear of the vehicle in the vehicle, among the plurality of sensor devices SNa1 to SNd6, via a wiring harness HN1c.

Meanwhile, the fourth communication module EM4 is connected to the sensor devices SNd1 to SNd6 disposed in the fourth area at the right rear of the vehicle in the vehicle via a wiring harness HN1d.

Meanwhile, the first communication module EM1 and the signal processing device 170 are connected to each other via a wiring harness HNm1, the second communication module EM2 and the signal processing device 170 are connected to each other via a wiring harness HNm2, the third communication module EM3 and the signal processing device 170 are connected to each other via a wiring harness HNm3, and the fourth communication module EM4 and the signal processing device 170 are connected to each other via a wiring harness HNm4.

In the vehicle communication device 300b of FIG. 4, the plurality of sensor devices SNa1 to SNd6 in the vehicle is divided to be disposed at four areas or zones, and each communication module is disposed to correspond to a specific one of the plurality of areas or zones, whereby the number and wiring length of wiring harnesses may be reduced, compared to FIG. 2. That is, the wiring harnesses between the plurality of sensor devices SNa1 to SNd6 and the signal processing device 170 may be simply implemented. In addition, efficient and stable data communication may be achieved.

Meanwhile, each of the plurality of sensor devices SNa1 to SNd6 may include a camera, a lidar, a radar, or a position sensor. Consequently, signals from various kinds of sensor devices may be efficiently and stably transmitted to the signal processing device 170.

Meanwhile, each of the communication modules EM1 to EM4 may output a vehicle control signal for door control and seat control during driving of the vehicle 200. Consequently, vehicle control through each of the communication modules EM1 to EM4 may be achieved.

Meanwhile, the communication modules EM1 to EM4 may transmit signals from the sensor devices SNa1 to SNd6 disposed at the plurality of areas of the vehicle 200 to the signal processing device 170. Consequently, efficient and stable data communication may be achieved.

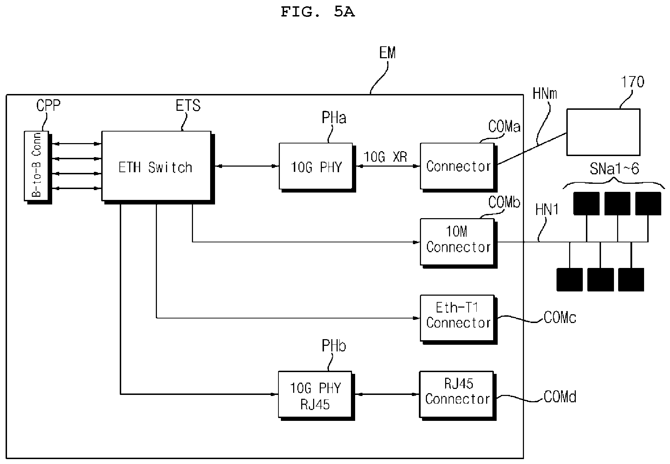

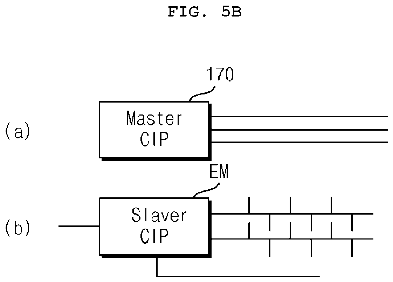

FIGS. 5A and 5B are views referred to in the description of FIG. 4.

First, FIG. 5A is an example of an internal block diagram of each communication module of FIG. 3 or 4.

Each communication module EM according to the embodiment of the present disclosure includes a first connector COMa configured to receive signals from some of the plurality of sensor devices SNa1 to SNd6 at a first communication speed, a second connector COMb configured to communicate with the signal processing device 170 at a second communication speed higher than the first communication speed, and an Ethernet switch ETS disposed between the first connector COMa and the second connector COMb, the Ethernet switch ETS being configured to perform switching.

Since the plurality of communication modules EM1 to EM4 is disposed for respective areas, as described above, the wiring harnesses between the plurality of sensor devices SNa1 to SNd6 and the signal processing device 170 may be simply implemented. In addition, Ethernet, which is a public communication protocol, is used, whereby efficient and stable data communication may be achieved.

Meanwhile, the Ethernet switch ETS is capable of performing communication from 10 M to 10 G, and a multi-connector may be used.

For example, the Ethernet switch ETS may perform PCIe communication for data communication with the signal processing device 170.

Meanwhile, the Ethernet switch ETS may perform data communication based on 10Base-T1S for data communication with each sensor device.

Meanwhile, the first connector COMa may perform serial communication, and the second connector COMb may perform parallel communication. Consequently, efficient and stable data communication may be achieved.

For example, the first connector COMa may be a high-speed connector for Ethernet communication based on 10GBase-T1. Consequently, a 10GHz-based physical layer converter PHa may be disposed between the first connector COMa and the Ethernet switch ETS.

Meanwhile, the second connector COMb may perform data communication based on 10Base-T1S.

Meanwhile, each communication module EM may further include a third connector COMc for communication based on 1000Base-T1 and 100Base-T1 and a fourth connector COMd for communication based on 1000Base-T1. Consequently, a physical layer converter PHb may be disposed between the fourth connector COMd and the Ethernet switch ETS.

Meanwhile, each communication module EM may further include a processor CPP electrically connected to the Ethernet switch ETS.

The processor CPP may process signals from the sensor devices SNa1 to SNd6 disposed at the plurality of areas of the vehicle 200, and may be configured to transmit the processed signals to the signal processing device 170 via the second connector COMb.

Meanwhile, the processing speed or processing capacity of the processor CPP may be lower than the processing speed or processing capacity of the signal processing device 170.

FIG. 5B is a view showing a communication scheme between a master Ethernet device and a slave Ethernet device.

The figure illustrates that the signal processing device 170 is operated as the master Ethernet device and the communication module EM is operated as the slave Ethernet device.

The signal processing device 170, which is the master Ethernet device, may perform serial communication with the communication module EM, and the communication module EM, which is the slave Ethernet device, may perform parallel communication with each sensor device. Consequently, efficient and stable data communication may be achieved.

Meanwhile, the signal processing device 170 may include an Ethernet switch ETS operated based on a second communication speed.

Meanwhile, the Ethernet switch ETS in each of the communication modules EM1 to EM4 may perform communication based on a first communication speed or a second communication speed higher than the first communication speed.

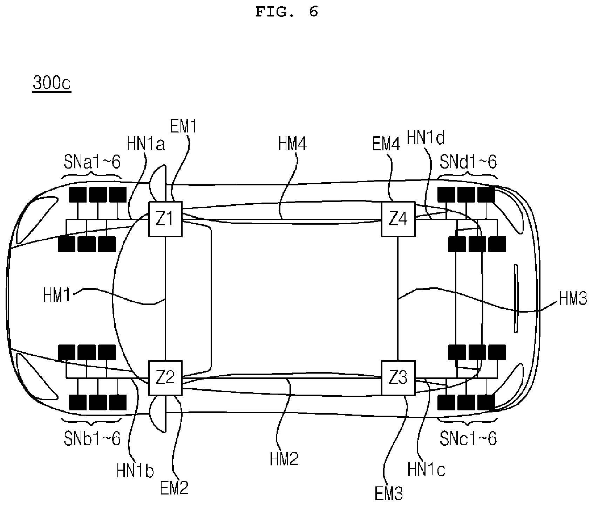

FIG. 6 is a view showing the disposition of a vehicle communication device in a vehicle according to a further embodiment of the present disclosure.

Referring to the figure, the vehicle communication device 300c according to the further embodiment of the present disclosure includes a plurality of communication modules EM1 to EM4 disposed at a plurality of areas of the vehicle 200, the plurality of communication modules EM1 to EM4 being configured to receive signals from a plurality of sensor devices SNa1 to SNd6 mounted to the vehicle 200 to be disposed at the plurality of areas of the vehicle 200 and to transmit at least some of the received signals to the outside.

The vehicle communication device 300c of FIG. 6 is similar to the vehicle communication device 300b of FIG. 4 except that the signal processing device 170 of FIG. 4 is omitted.

In the vehicle communication device 300c of FIG. 6, therefore, the first communication module EM1 and the second communication module EM2 are connected to each other via a wiring harness HM1, the second communication module EM2 and the third communication module EM3 are connected to each other via a wiring harness HM2, the third communication module EM3 and the fourth communication module EM4 are connected to each other via a wiring harness HM3, and the fourth communication module EM4 and the first communication module EM1 are connected to each other via a wiring harness HM4.

Consequently, each of the communication modules EM1 to EM4 receives signals from corresponding ones of the sensor devices SNa1 to SNd6 disposed at the plurality of areas, and transmits at least some of the received signals to a communication module adjacent thereto.

That is, each of the communication modules EM1 to EM4 includes a first connector COMa configured to receive signals from the plurality of sensor devices at a first communication speed, a second connector COMb configured to communicate with one of the communication modules adjacent thereto at a second communication speed higher than the first communication speed, and an Ethernet switch ETS disposed between the first connector COMa and the second connector COMb, the Ethernet switch ETS being configured to perform switching.

In the vehicle communication device 300c of FIG. 6, the plurality of sensor devices SNa1 to SNd6 in the vehicle is divided to be disposed at four areas or zones, and each communication module is disposed to correspond to a specific one of the plurality of areas or zones, whereby the number and wiring length of wiring harnesses may be reduced, compared to FIG. 2.

Meanwhile, each of the communication modules EM1 to EM4 may output a vehicle control signal for door control and seat control during driving of the vehicle 200. Consequently, vehicle control through each of the communication modules EM1 to EM4 may be achieved.

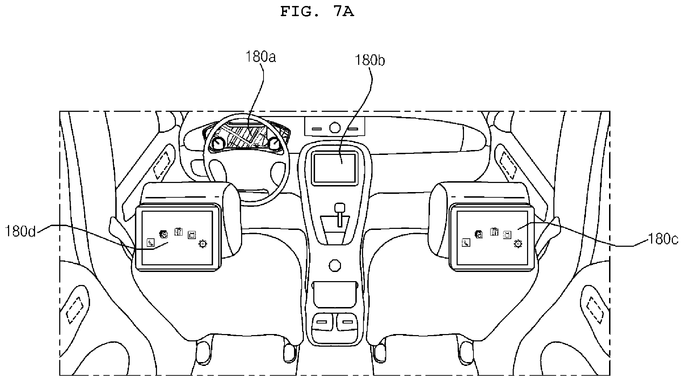

FIG. 7A is a view showing another example of the interior of the vehicle.

Referring to the figure, a cluster display 180a, an audio video navigation (AVN) display 180b, rear seat entertainment displays 180c and 180d, and a rear-view mirror display (not shown) may be mounted in the vehicle.

The embodiment of the present disclosure proposes a scheme for a plurality of displays 180a to 180d constituting a display apparatus 100 for vehicle to display the same images in a synchronized state. This will be described with reference to FIG. 10 and subsequent figures.

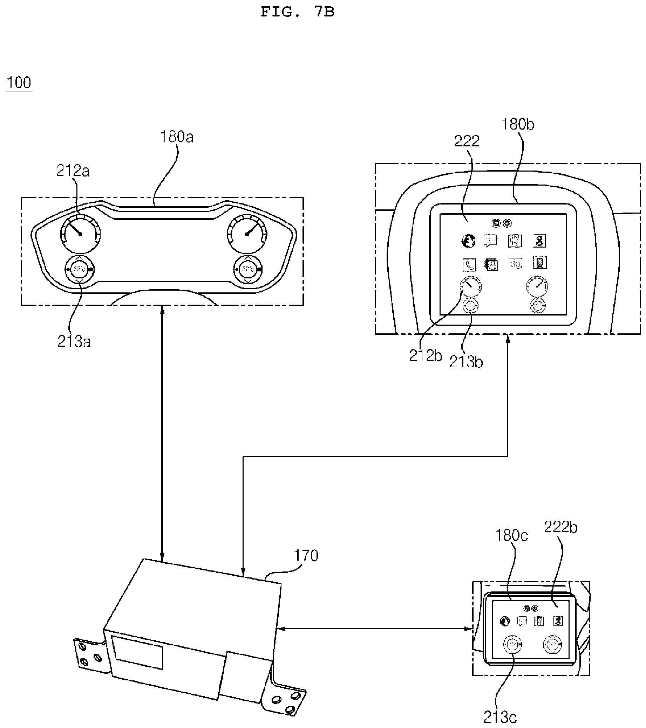

FIG. 7B is a view showing the external appearance of a display apparatus for vehicle according to an embodiment of the present disclosure.

The display apparatus 100 for vehicle according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicle according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS) .

The signal processing device 170 according to the embodiment of the present disclosure may be configured to display the same information or the same images in a synchronized state on the displays 180a to 180c to be operated under various operating systems.

Meanwhile, FIG. 7B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

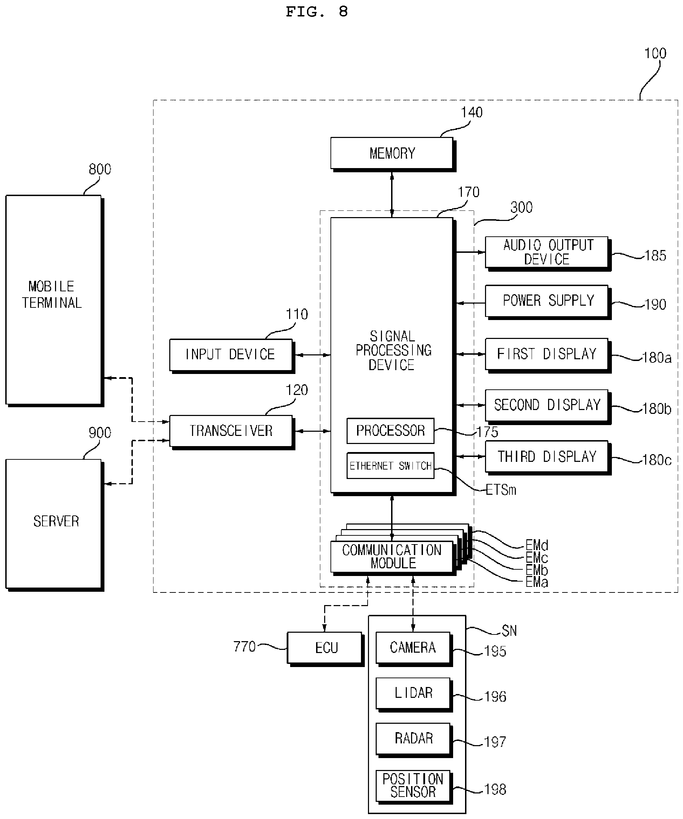

FIG. 8 illustrates an example of an internal block diagram of the display apparatus for vehicle according to the embodiment of the present disclosure.

Referring to the figure, the display apparatus 100 for vehicle according to the embodiment of the present disclosure may include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

Meanwhile, the vehicle communication device 300 according to the embodiment of the present disclosure may include the plurality of communication modules EMa to EMd and the signal processing device 170.

The signal processing device 170 may be provided therein with an Ethernet switch ETSm for data communication with each of the communication modules EM1 to EM4.

An Ethernet switch ETS in each of the communication modules EM1 to EM4 may be operated as a slave Ethernet device based on a first communication speed or a second communication speed, and the Ethernet switch ETSm in the signal processing device 170 may be operated as a master Ethernet device based on the second communication speed.

The communication modules EM1 to EM4 may perform data communication with the plurality of sensor devices SNa1 to SNd6.

Meanwhile, each of the plurality of sensor devices SNa1 to SNd6 may include a camera 195, a lidar 196, a radar 197, or a position sensor 198.

The input device 110 may include a physical button or pad for button input or touch input.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The plurality of communication modules EM1 to EM4 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module may include a GPS module configured to receive GPS information or a position sensor 198.

Meanwhile, at least one of the plurality of communication modules EM1 to EM4 may transmit position information data sensed by the GPS module or the position sensor 198 to the signal processing device 170.

Meanwhile, at least one of the plurality of communication modules EM1 to EM4 may receive front-of-vehicle image data, side-of-vehicle image data, rear-of-vehicle image data, and obstacle-around-vehicle distance information from the camera 195, the lidar 196, or the radar 197, and may transmit the received information to the signal processing device 170.

The memory 140 may store various data necessary for overall operation of the display apparatus 100 for vehicle, such as programs for processing or control of the signal processing device 170.

For example, the memory 140 may store data about the hypervisor and first to third virtual machines executed by the hypervisor in the processor 175.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicle.

For example, the signal processing device 170 may include a processor 175 configured to perform signal processing for the displays 180a and 180b.

The processor 175 may execute the first to third virtual machines 520 to 540 on the hypervisor 505 (see FIG. 10) in the processor 175.

Among the first to third virtual machines 520 to 540 (see FIG. 10), the first virtual machine 520 may be called a server virtual machine, and the second and third virtual machines 530 and 540 may be called guest virtual machines.

The second virtual machine 530 may be operated for the first display 180a, and the third virtual machine 540 may be operated for the second display 180b.

For example, the first virtual machine 520 in the processor 175 may receive sensor data from the plurality of sensor devices, such as vehicle sensor data, position information data, camera image data, audio data, or touch input data, and may process and output the received sensor data.

As described above, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

Meanwhile, the first virtual machine 520 may be configured to write data in the shared memory 508, whereby the second virtual machine 530 and the third virtual machine 540 share the same data.

For example, the first virtual machine 520 may be configured to write vehicle sensor data, the position information data, the camera image data, or the touch input data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

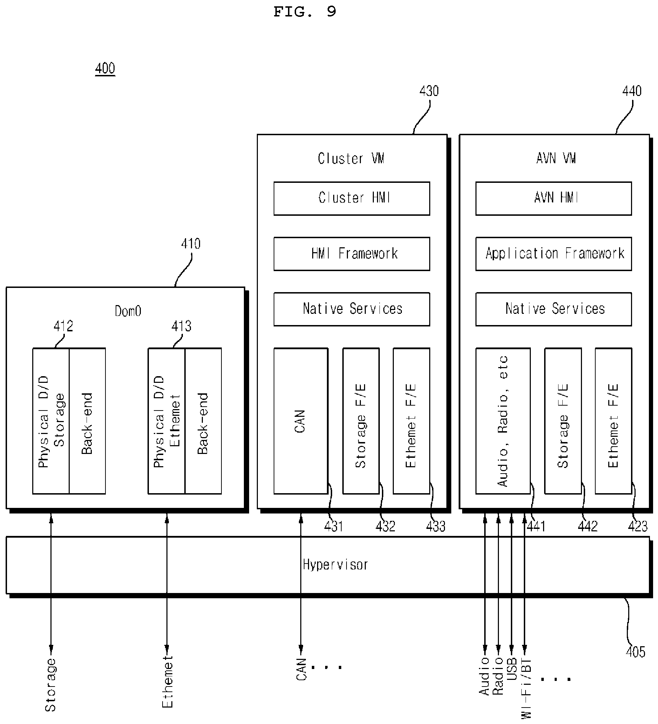

FIG. 9 is a view showing a system driven in a signal processing device related to the present disclosure.

Referring to the figure, FIG. 9 is a view illustrating that virtual machines are used for the cluster display 180a and the AVN display 180b.

The system 400 driven in the signal processing device of FIG. 9 illustrates that a cluster virtual machine 430 and an AVN virtual machine 440 are executed through a hypervisor 405 in the processor 175.

Meanwhile, the system 400 driven in the signal processing device of FIG. 9 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 9, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 9. That is, unlike FIG. 9, virtual machines are classified into a server virtual machine and guest virtual machines for inputting and outputting various memory data and communication data not in the guest virtual machines but in the server virtual machine. This will be described with reference to FIG. 10 and subsequent figures.

FIG. 10 is a view showing an example of a system driven in a signal processing device according to an embodiment of the present disclosure.

Referring to the figure, the system 500 of FIG. 10 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 driven in the signal processing device 170 of FIG. 10 illustrates that a legacy virtual machine 510 is also executed on the hypervisor 505 in the processor 175.

The legacy virtual machine 510 may include an interface 511 for data communication with the memory 140 and Ethernet communication with the plurality of communication modules EM1 to EM4.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 and Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 and Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 10.

In the system 500, CAN communication data or Ethernet data from the plurality of communication modules EM1 to EM4 are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 10, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Meanwhile, in the system 500 of FIG. 10, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

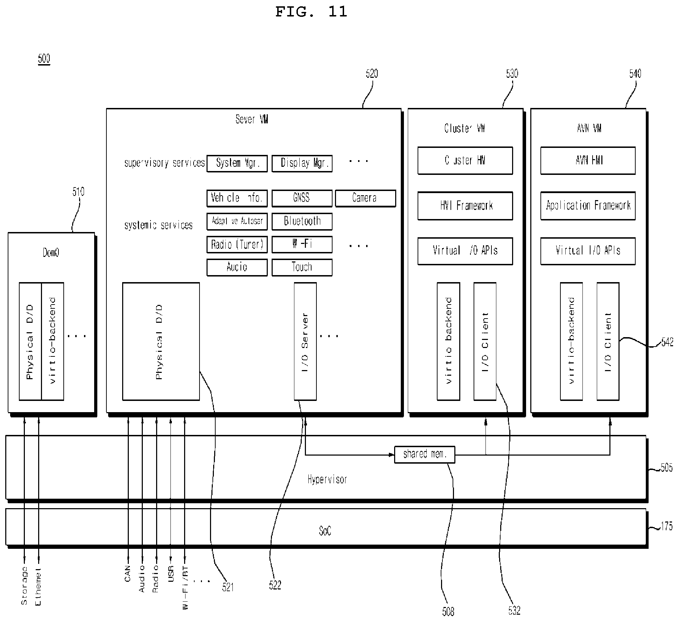

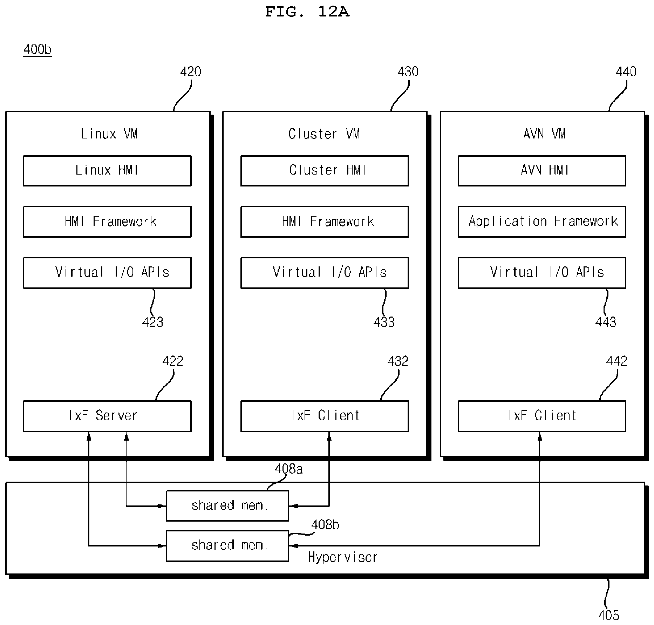

FIG. 11 is a view referred to in the description of operation of the system driven in the signal processing device according to the embodiment of the present disclosure, and FIGS. 12A to 20 are views referred to in the description of FIG. 10 or 11.

First, in the system 500 of FIG. 11, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of the same data to the second and third virtual machines 530 and 540.

For example, the same image data may be illustrated as the same data. Consequently, the plurality of displays 180a and 180b in the vehicle may display the same images in a synchronized state.

Meanwhile, in the system 500 of FIG. 11, the processor 175 in the signal processing device 170 executes the first to third virtual machines 520 to 540 on the hypervisor 505 in the processor 175, and the first virtual machine 520 in the processor 175 may transmit the same data to the second and third virtual machines 530 and 540 in a synchronized state using the shared memory 508 based on the hypervisor 505.

For example, CAN communication data, audio data, radio data, USB data, wireless communication data, position information data, or touch data may be illustrated as the same data. Consequently, the plurality of displays 180a and 180b in the vehicle may display the same data in a synchronized state.

Meanwhile, the first virtual machine 520 in the processor 175 may receive position information data variable due to movement from any one of the plurality of communication modules, may process the position information data, and may provide the processed position information data to the second virtual machine 530 or the third virtual machine 540. Consequently, not 1:1 data communication but 1:N data communication using the shared memory may be performed between the virtual machines.

Meanwhile, the second virtual machine 530 and the third virtual machine 540 may be driven by different operating systems. Even though the plurality of virtual machines is driven by different operating systems, therefore, it is possible to perform high-speed data communication.

Meanwhile, although not shown in FIG. 11, the legacy virtual machine 510 may transmit memory data from the memory 140 and Ethernet data by Ethernet communication with the plurality of communication modules EM1 to EM4 to the second and third virtual machines 530 and 540 in a synchronized state using the shared memory 508 based on the hypervisor 505. That is, it is possible to perform 1:N data communication with respect to the memory data or the Ethernet data, whereby it is possible to transmit the same data in a synchronized state.

FIG. 12A illustrates that three virtual machines 420, 430, and 440 are operated in a system 400b.

Referring to the figure, the first virtual machine 420, which is a Linux-based virtual machine, may include an input and output server interface 422 for data transmission, and the second virtual machine 430 and the third virtual machine 440 may include input and output client interfaces 432 and 442 for data communication with the input and output server interface 422, respectively.

For example, the first virtual machine 420 must set a first shared memory 408a in a hypervisor 405 in order to transmit first data to the second virtual machine 430, and the first virtual machine 420 must set a second shared memory 408b different from the first shared memory 408a in the hypervisor 405 in order to transmit the same first data to the third virtual machine 440.

In the case in which the same first data are transmitted, there is a disadvantage in that resources are wasted and synchronization is not easy in the case in which an additional shared memory is used, as shown in FIG. 12A.

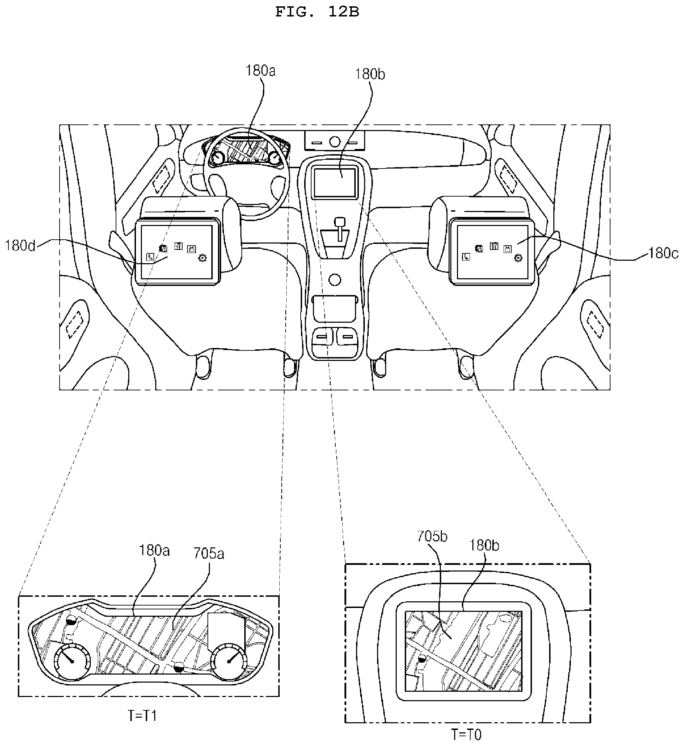

FIG. 12B illustrates that, by the system 400b of FIG. 12A, the second virtual machine 430 displays image data received through the first shared memory 408a on the first display 180a, and the third virtual machine 440 displays image data received through the second shared memory 408b on the second display 180b.

FIG. 12B illustrates that an image 705a displayed on the first display 180a and an image 705b displayed on the second display 180b are not synchronized with each other and that the image 705b displayed on the second display 180b corresponds to a more previous frame than the image 705a displayed on the first display 180a.

In response to the first virtual machine 420 transiting the same image data, as described above, synchronization cannot be performed at the time of display of the image, as shown in FIG. 12B, in the case in which an additional shared memory is used, as shown in FIG. 12A.

In order to solve this problem, the present disclosure proposes a scheme for assigning a single shared memory at the time of transmission of the same data. Consequently, 1:N data communication is performed, whereby synchronized data transmission is achieved.

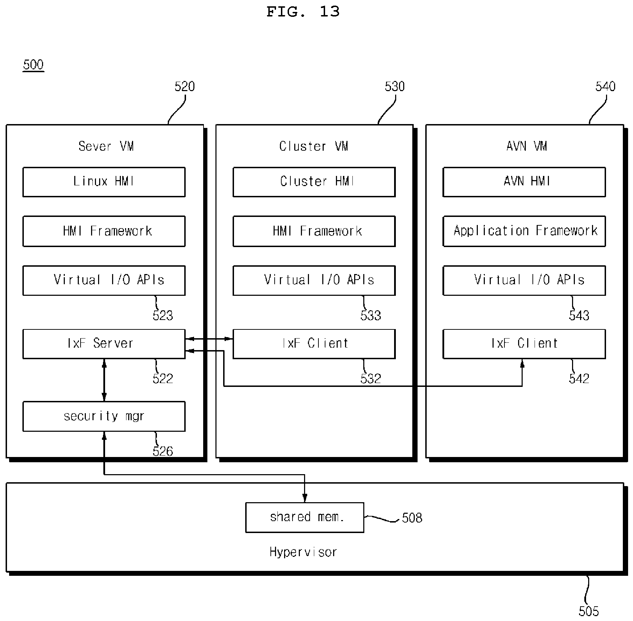

FIG. 13 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 in order to transmit the same data to the second virtual machine 530 and the third virtual machine 540.

Consequently, the first display 180a and the second display 180b in the vehicle may display the same data or the same images in a synchronized state.

Meanwhile, high-speed data communication may be performed between the plurality of virtual machines. Furthermore, high-speed data communication may be performed even though the plurality of virtual machines is driven by different operating systems.

Meanwhile, the first virtual machine 520 in the processor 175 may not allocate memories corresponding in number to the virtual machines but may use a single shared memory 508, not memory allocation when transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon.

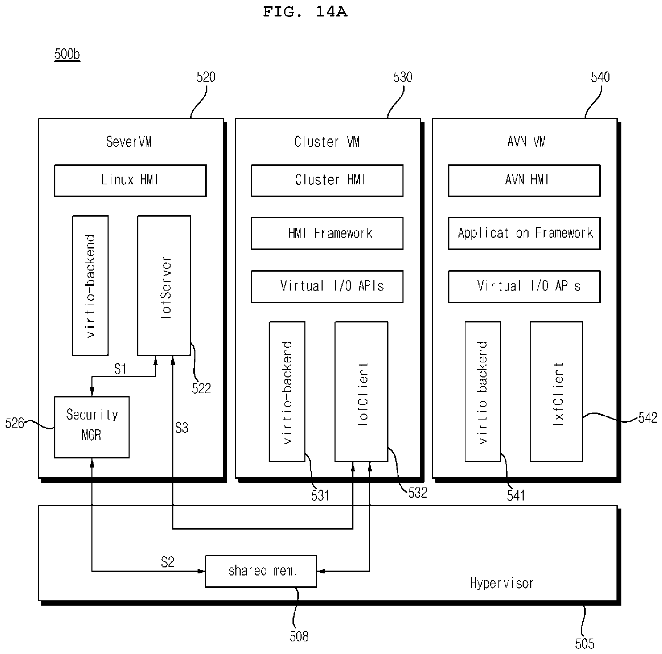

FIG. 14A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data may be private key data for data access.

Meanwhile, the first virtual machine 520 in the processor 175 may transmit information regarding the shared memory 508 to the second virtual machine 530 and the third virtual machine 540 after setting of the shared memory 508.

The input and output client interfaces 532 and 542 may access the shared memory 508 based on the received key data (S5), and may copy the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

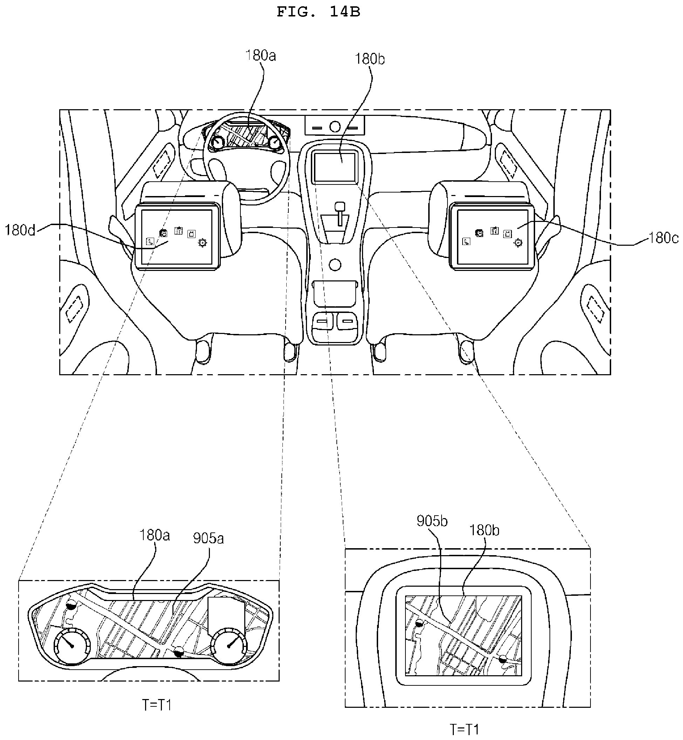

FIG. 14B illustrates that, by the system 500b of FIG. 14A, the second virtual machine 530 displays image data received through the shared memory 508 on the first display 180a, and the third virtual machine 540 displays image data received through the shared memory 508 on the second display 180b.

FIG. 14B illustrates that an image 905 displayed on the first display 180a and an image 905 displayed on the second display 180b are synchronized, whereby the same images 905a and 905b are displayed at the time of Tl.

That is, image data processed by the first virtual machine 520 in the processor 175 are transmitted to the second virtual machine 530 and the third virtual machine 540 through the shared memory 508, and the first image 905 displayed on the first display 180a and the second image 905 displayed on the second display 180b based on the image data may be the same. Consequently, the plurality of displays 180a and 180b in the vehicle may display the same images in a synchronized state. In addition, high-speed data communication between the plurality of virtual machines may be performed.

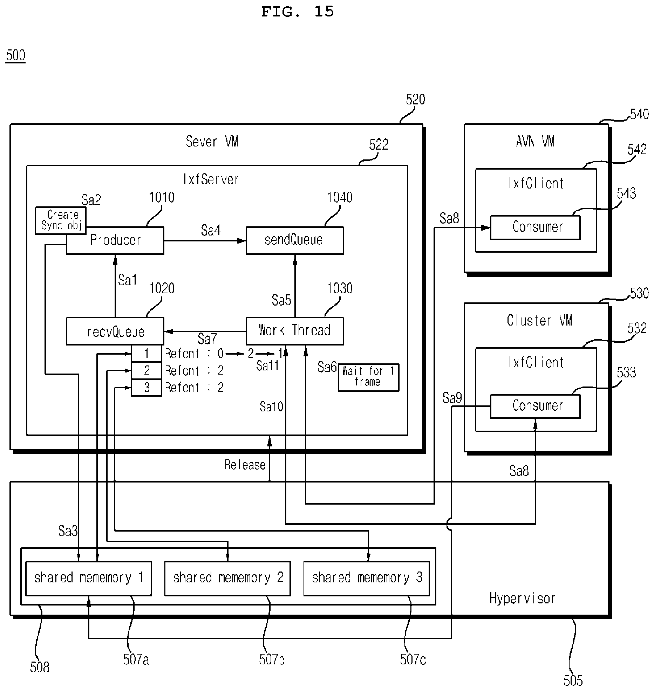

FIG. 15 is a view showing the output server interface 522 of FIG. 13 in detail.

Referring to the figure, a plurality of buffers 507a, 507b, and 507c may be set in the shared memory 508.

Meanwhile, the input and output client interfaces 532 and 542 in the second virtual machine 530 and the third virtual machine 540 may include consumers 533 and 543, respectively.

Meanwhile, the input and output server interface 522 in the first virtual machine 520 may include a producer 1010 configured to generate a synchronization object for graphical synchronization, a recvQueue 1020 configured to manage, particularly receive, a queue, a WorkThread 1030 configured to manage a queue and to control operation of the queue, and a sendQueue 1040 configured to manage, particularly transmit, a queue.

First, the producer 1010 receives information regarding the index of an empty index, among the plurality of buffers 507a, 507b, and 507c in the shared memory 508, from the recvQueue 1020 (Sa1). For example, in the case in which the first buffer 507a, among the plurality of buffers 507a, 507b, and 507c, is empty, information regarding the first buffer 507a is received (Sa1).

In particular, the producer 1010 may receive information regarding the first buffer 507a having a reference count refcnt of 0 from the recvQueue 1020.

Next, the producer 1010 generates a synchronization object for graphical synchronization in order to perform writing in the first buffer 507a (Sa2).

Next, the producer 1010 writes data about the generated synchronization object in the first buffer 507a in the shared memory 508 (Sa3).

Next, the producer 1010 queues information regarding the first buffer 507a, i.e. a buffer index, to the sendQueue 1040 (Sa4).

Next, in the case in which data are input to the sendQueue 1040, which is periodically monitored, the WorkThread 1030 senses and receives or reads the data (Sa5).

For example, in the case in which information regarding the first buffer 507a is input to the sendQueue 1040, which is monitored, the WorkThread 1030 receives the information.

Meanwhile, the WorkThread 1030 waits until a frame about the generated synchronization object is completely drawn (Sa6).

Next, the WorkThread 1030 increases the reference count refcnt of the buffer corresponding to the first buffer 507a by the number of consumers or the number of input and output client interfaces (Sa7).

For example, since the number of consumers 533 and 543 or the number of input and output client interfaces 532 and 542 is two in the figure, the reference count refcnt of the buffer corresponding to the first buffer 507a is increased from 0 to 2.

Next, the WorkThread 1030 transmits the buffer index to the consumers 533 and 543 (Sa8). For example, information corresponding to the first buffer 507a is transmitted (Sa8).

Next, the consumers 533 and 543 access the first buffer 507a in the shared memory 508 using the received buffer index to copy data (Sa9).

Next, the consumers 533 and 543 return the buffer index to the producer 1010 or the WorkThread 1030 after completion of data copying (Sa10).

Next, the producer 1010 reduces the reference count refcnt of the first buffer 507a by 1 based on information or a buffer index received after completion of data copying for each of the consumers 533 and 543.

For example, in the case in which the first consumer 533 completes data copying, the reference count refcnt of the first buffer 507a is reduced from 2 to 1.

Subsequently, in the case in which the second consumer 543 completes data copying, the reference count refcnt of the first buffer 507a is reduced from 1 to 0.

Meanwhile, in the case in which the reference count refcnt of the first buffer 507a is 0, the buffer may be used by the producer 1010.

Similarly, first frame data may be shared using the first buffer 507a, then second frame data may be shared using the second buffer 507b, then third frame data may be shared using the third buffer 507c, and then fourth frame data may be shared using the first buffer 507a again.

That is, the input and output server interface 522 may receive information regarding the empty first buffer 507a in the shared memory 508, may write the first data in the first buffer 507a in the shared memory 508, and may transmit buffer information of the first buffer 507a to the input and output client interfaces 532 and 542 in the second virtual machine 530 and the third virtual machine 540.

In particular, the reference count of the first buffer 507a may be changed in a first direction (e.g. the reference count being increased) based on writing of the first data in the first buffer 507a, and in the case in which copying of the first data from the first buffer 507a is completed, the reference count of the first buffer 507a may be changed in a second direction, which is opposite the first direction, (e.g. the reference count being decreased).

For example, the consumers 533 and 543 in the input and output client interfaces 532 and 542 in the second virtual machine 530 and the third virtual machine 540 may change the reference count of the first buffer 507a in the first direction (e.g. the reference count being increased) based on writing of the first data in the first buffer 507a.

Meanwhile, in the case in which copying of the first data from the first buffer 507a is completed, the producer 1010 in the input and output server interface 522 in the first virtual machine 520 may change the reference count of the first buffer 507a in the second direction, which is opposite the first direction, (e.g. the reference count being decreased). After completion of copying, therefore, new data may be written in the first buffer 507a.

Meanwhile, the first virtual machine 520 may write first frame data to third frame data in the first buffer 507a to the third buffer 507c, respectively, and the input and output client interfaces 532 and 542 in the second virtual machine 530 and the third virtual machine 540 may sequentially copy the first frame data to the third frame data from the first buffer 507a to the third buffer 507c.

Meanwhile, after the input and output client interface 542 in the third virtual machine 540 copying the first frame data from the first buffer 507a is completed, the second virtual machine 530 may copy the second frame data from the second buffer 507b. Consequently, synchronization between the second virtual machine 530 and the third virtual machine 540 may be performed at the time of data sharing.

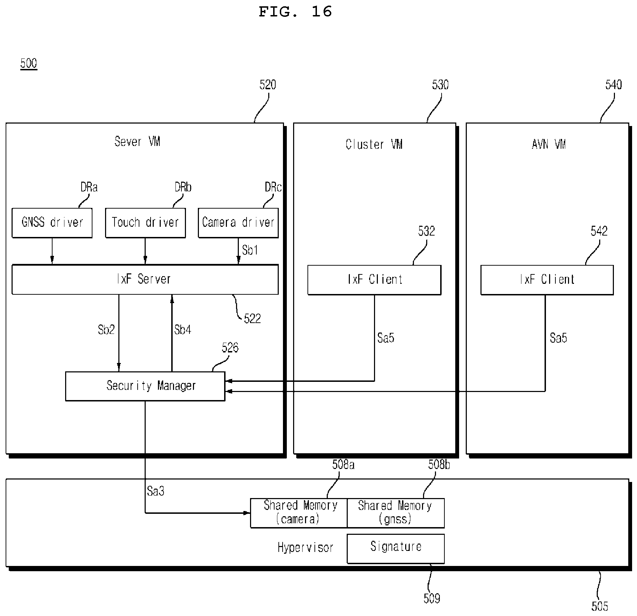

FIG. 16 is a view illustrating that various drivers DRa, DRb, and DRc are provided in the first virtual machine 520.

Referring to the figure, the first virtual machine 520 may include a position information driver DRa configured to process position information, a touch driver DRb configured to process touch input, and a camera driver DRc configured to process an image from the camera.

Consequently, the first virtual machine 520 may set the shared memory based on the hypervisor 505 for each of the position information driver DRa, the touch driver DRb, and the camera driver DRc.

Meanwhile, the input and output server interface 522 may set a first shared memory 508a for transmission of image data from the camera driver DRc, and may set a second shared memory 508b for transmission of position information from the position information driver DRa.

Meanwhile, key data of the first shared memory 508a and key data of the second shared memory 508b may be transmitted to the second virtual machine 530 and the third virtual machine 540, and the second virtual machine 530 and the third virtual machine 540 may access the first shared memory 508a and the second shared memory 508b based on the key data of the first shared memory 508a and the key data of the second shared memory 508b.

In the figure, the case in which data from the position information driver DRa and data from the camera driver DRc are shared is illustrated, and therefore two shared memories 508a and 508b are illustrated as the shared memories based on the hypervisor 505.

Since a shared memory is set for each of different kinds of shared data, as described above, it is possible to prevent data confusion at the time of data sharing and to perform high-speed data communication between the plurality of virtual machines.

Meanwhile, in response to different kinds of shared data being shared, the security manager 526 may generate key data information for data access, and may generate and register virtual machine information, information for each piece of equipment, allocated memory address information, buffer index information, and the generated key data information in the form of a table.

Meanwhile, the input and output client interfaces 532 and 542 in the second virtual machine 530 and the third virtual machine 540 may be connected to the security manager 526, may request and receive key data with reference to the table in the security manager 526, and may access a corresponding one of the shared memories using the received key data.

Meanwhile, in the case in which data from the camera driver DRc are shared through the first shared memory 508a and in the case in which data from the position information driver DRa are shared through the second shared memory 508b, the virtual machine information in one case and the virtual machine information in the other case are the same to each other, but the information for each piece of equipment, the allocated memory address information, the buffer index information, and the generated key data information in one case and the information for each piece of equipment, the allocated memory address information, the buffer index information, and the generated key data information in the other case are different from each other. Consequently, it is possible to prevent data confusion at the time of sharing of different kinds of data and to perform high-speed data communication between the plurality of virtual machines.

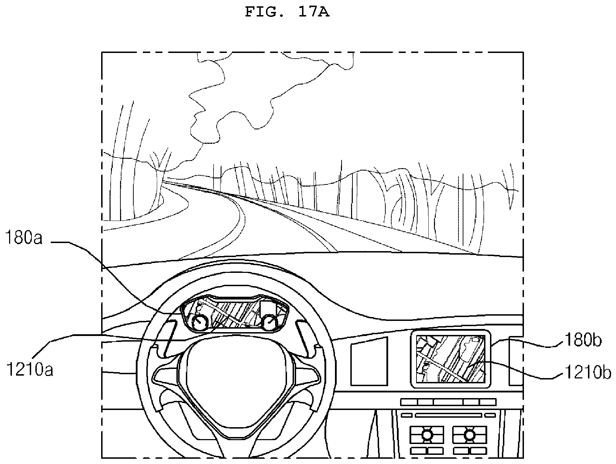

FIG. 17A illustrates that the same images 1210a and 1210b are displayed respectively on the first display 180a and the second display 180b in the vehicle.

For example, in the case in which the second virtual machine 530 is operated for rendering of the first display 180a and the third virtual machine 540 is operated for rendering of the second display 180b, 1:N data communication by the first virtual machine 520 is performed, whereby synchronized images are displayed, as shown in the figure.

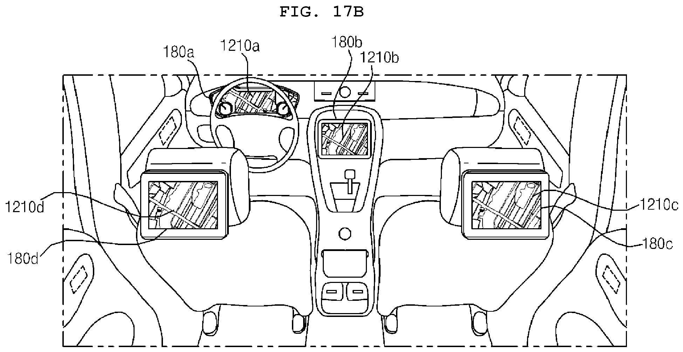

FIG. 17B illustrates that the same images 1210a, 1210b, 1210c, and 1210d are displayed respectively on the first display 180a, the second display 180b, the third display 180c, and the fourth display 180d in the vehicle.

For example, in the case in which the second virtual machine 530 is operated for rendering of the first display 180a, the third virtual machine 540 is operated for rendering of the second display 180b, the fourth virtual machine (not shown) is operated for rendering of the third display 180c, and a fifth virtual machine (not shown) is operated for rendering of the fourth display 180d, 1:N data communication by the first virtual machine 520 is performed, whereby synchronized images are displayed, as shown in the figure.

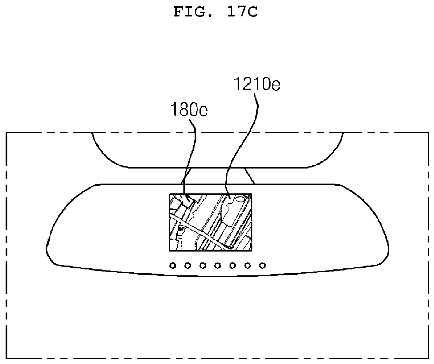

FIG. 17C illustrates that a display 180e is formed on a rear-view mirror in the vehicle in order to display an image 1210e.

For example, in the case in which FIGS. 17A and 17C are linked to each other, the same images 1210a, 1210b, and 1210e may be displayed respectively on the first display 180a, the second display 180b, and the rear-view mirror display 180e in the vehicle.

Meanwhile, in the case in which the second virtual machine 530 is operated for rendering of the first display 180a, the third virtual machine 540 is operated for rendering of the second display 180b, and the fourth virtual machine (not shown) is operated for rendering of the rear-view mirror display 180e, 1:N data communication by the first virtual machine 520 is performed, whereby synchronized images are displayed, as shown in the figure.

As another example, in the case in which FIGS. 17B and 17C are linked to each other, the same images 1210a, 1210b, 1210c, 1210d, and 1210e may be displayed respectively on the first display 180a, the second display 180b, the third display 180c, the fourth display 180d, and the rear-view mirror display 180e in the vehicle.

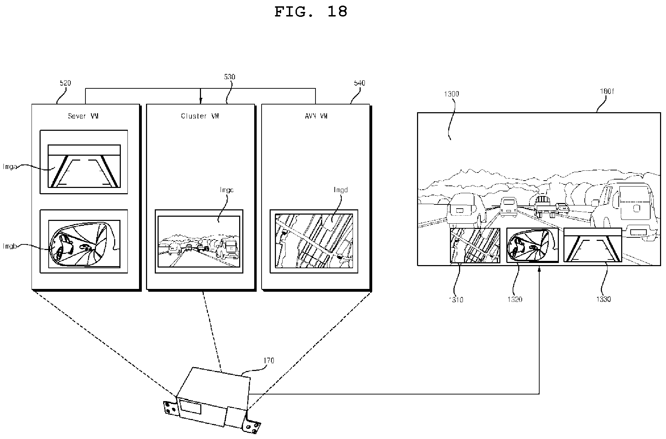

FIG. 18 illustrates that a HUD display 180f is disposed in the vehicle.

Referring to the figure, the display apparatus 100 for vehicle may include a first display 180a corresponding to an instrument cluster, a second display 180b corresponding to an AVN, and a HUD display 180f.

The signal processing device 170 may be configured to display an image generated by combining first image data processed by the first virtual machine 520, second image data processed by the second virtual machine 530, and third image data processed by the third virtual machine 540 on the third display 180c.

The figure illustrates that the first virtual machine 520 processes rear-view mirror image data Imga and side mirror image data Imgb, the second virtual machine 530 processes front camera image data Imgc, the third virtual machine 540 processes navigation image data Imgd, and an image generated by combining the four kinds of image data is displayed on the HUD display 180f, which is a third display.

The figure illustrates that an image 1300 corresponding to the front camera image data Imgc is a background, and images 1310, 1320, and 1330 corresponding respectively to the navigation image data Imgd, the side mirror image data Imgb, and the rear-view mirror image data Imga are displayed together. As a result, synchronized images may be displayed together. Consequently, it is possible for a user to check all images around the vehicle through the HUD display 180f.

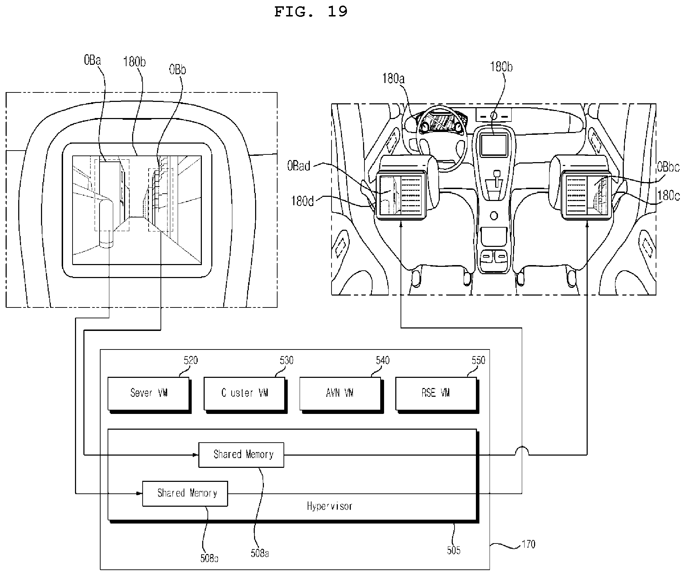

FIG. 19 illustrates that portions Oba and OBb of an image displayed on the second display 180b are processed and displayed on the third display 180c and the fourth display 180d, which are RSE displays, in a synchronized state.

The figure illustrates that a partial image OBad is displayed on the third display 180c and another partial image OBbd is displayed on the fourth display 180d in a synchronized state.

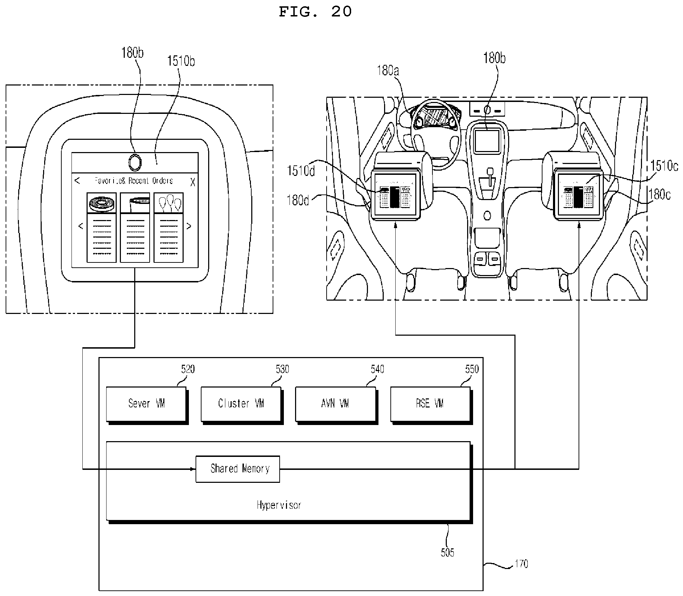

FIG. 20 illustrates that an image 1510b displayed on the second display 180b is processed and displayed on the third display 180c and the fourth display 180d, which are RSE displays, in a synchronized state.

The figure illustrates that the same image 1510c is displayed on the third display 180c and the same image 1510d is displayed on the fourth display 180d in a synchronized state.

Meanwhile, in the display apparatus 100 for vehicle according to the embodiment of the present disclosure, the first virtual machine 520 in the signal processing device 170 may receive first touch input on the first display 180a through the second virtual machine 530 and may transmit image data processed based on the first touch input to the second virtual machine 530 and the third virtual machine 540 through the shared memory 508, and the first display 180a and the second display 180b may display the same images corresponding to the first touch input. Consequently, the plurality of displays 180a and 180b in the vehicle may display the same images in a synchronized state.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A vehicle communication device comprising:
a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to an outside; and
a signal processing device disposed between the plurality of areas of the vehicle, the signal processing device being configured to receive signals from the plurality of communication modules and to perform signal processing, wherein
each communication module comprises:
a first connector configured to receive signals from some of the plurality of sensor devices at a first communication speed;
a second connector configured to communicate with the signal processing device at a second communication speed higher than the first communication speed; and
an Ethernet switch disposed between the first connector and the second connector, the Ethernet switch being configured to perform switching.

2. The vehicle communication device of claim 1, wherein
each communication module further comprises a processor electrically connected to the Ethernet switch, and
the processor is configured to process signals from the sensor devices disposed at the plurality of areas of the vehicle and transmit the processed signals to the signal processing device via the second connector.

3. The vehicle communication device of claim 1, wherein each communication module transmits signals from the sensor devices disposed at a corresponding one of the plurality of areas of the vehicle to the signal processing device.

4. The vehicle communication device of claim 1, wherein
the signal processing device comprises an Ethernet switch operated based on the second communication speed,
the Ethernet switch in the signal processing device is operated as a master Ethernet device, and
the Ethernet switch in each communication module is operated as a slave Ethernet device based on the first communication speed or the second communication speed.

5. The vehicle communication device of claim 1, wherein the first connector performs serial communication, and the second connector performs parallel communication.

6. The vehicle communication device of claim 1, wherein the plurality of communication modules comprises:
a first communication module configured to receive signals from the sensor devices disposed in a first area of the vehicle, among the plurality of sensor devices, and to transmit the signals to the signal processing device; and
a second communication module configured to receive signals from the sensor devices disposed in a second area of the vehicle, among the plurality of sensor devices, and to transmit the signals to the signal processing device.

7. The vehicle communication device of claim 1, wherein the plurality of communication modules comprises:
a first communication module configured to receive signals from the sensor devices disposed in a first area of the vehicle, among the plurality of sensor devices, and to transmit the signals to the signal processing device;
a second communication module configured to receive signals from the sensor devices disposed in a second area of the vehicle, among the plurality of sensor devices, and to transmit the signals to the signal processing device;
a third communication module configured to receive signals from the sensor devices disposed in a third area of the vehicle, among the plurality of sensor devices, and to transmit the signals to the signal processing device; and
a fourth communication module configured to receive signals from the sensor devices disposed in a fourth area of the vehicle, among the plurality of sensor devices, and to transmit the signals to the signal processing device.

8. The vehicle communication device of claim 1, wherein each communication module outputs a vehicle control signal for door control and seat control during driving of the vehicle.

9. The vehicle communication device of claim 1, wherein each of the plurality of sensor devices comprises a camera, a lidar, a radar, or a position sensor.

10. The vehicle communication device of claim 1, wherein
the signal processing device comprises a processor configured to perform signal processing for a display mounted in the vehicle,
the processor executes first to third virtual machines on a hypervisor in the processor,
the second virtual machine is operated for a first display,
the third virtual machine is operated for a second display, and
the first virtual machine in the processor is configured to set a shared memory based on the hypervisor for transmission of data to the second virtual machine and the third virtual machine.

11. The vehicle communication device of claim 10, wherein the first virtual machine in the processor is configured to set the shared memory based on the hypervisor for transmission of the same data to the second virtual machine and the third virtual machine.

12. The vehicle communication device of claim 10, wherein the first virtual machine in the processor transmits information regarding the shared memory comprising key data for data access to the second virtual machine and the third virtual machine after setting of the shared memory.

13. The vehicle communication device of claim 10, wherein
the first virtual machine in the processor comprises an input and output server interface and a security manager, and
each of the second virtual machine and the third virtual machine comprises an input and output client interface.

14. The vehicle communication device of claim 13, wherein
in order to transmit data from the input and output server interface in the first virtual machine to the input and output client interface,
the security manager allocates the shared memory, and
the input and output client interface transmits a request for connection to the input and output server interface after allocation of the shared memory.

15. The vehicle communication device of claim 13, wherein
the input and output server interface transmits information regarding the shared memory comprising key data for data access to the input and output client interface after allocation of the shared memory, and
the input and output client interface accesses the shared memory based on the key data.

16. The vehicle communication device of claim 12, wherein the input and output server interface receives information regarding a first buffer in the shared memory, the first buffer being empty, writes first data in the first buffer in the shared memory, and transmits buffer information of the first buffer to the input and output client interfaces in the second virtual machine and the third virtual machine.

17. The vehicle communication device of claim 10, wherein the first virtual machine in the processor is configured to receive vehicle sensor data, position information data, or camera image data from at least one of the plurality of communication modules, process the received data, and provide the processed data to the second virtual machine or the third virtual machine.

18. The vehicle communication device of claim 10, wherein the first virtual machine receives wheel speed sensor data of the vehicle from at least one of the plurality of communication modules, processes the received wheel speed sensor data, and transmits the processed wheel speed sensor data to at least one of the second virtual machine or the third virtual machine.

19. A vehicle communication device comprising:
a plurality of communication modules disposed at a plurality of areas of a vehicle, the plurality of communication modules being configured to receive signals from a plurality of sensor devices mounted to the vehicle to be disposed at the plurality of areas of the vehicle and to transmit at least some of the received signals to an outside, wherein
each communication module comprises:
a first connector configured to receive signals from the plurality of sensor devices at a first communication speed;
a second connector configured to communicate with one of the communication modules adjacent thereto at a second communication speed higher than the first communication speed; and
an Ethernet switch disposed between the first connector and the second connector, the Ethernet switch being configured to perform switching.

20. A display apparatus for vehicle, the display apparatus comprising:
a first display;
a second display; and
a vehicle communication device of any one of claims 1 to 19, wherein
a signal processing device in the vehicle communication device comprises a processor configured to perform signal processing for the first display and the second display.
